Europäisches Patentamt

European Patent Office

Office européen des brevets

(19)

(11) Publication number: **0 025 322**
**B1**

(12) **EUROPEAN PATENT SPECIFICATION**

(45) Date of publication of patent specification: **13.06.84**

(51) Int. Cl.³: **B 60 P 1/64**

(21) Application number: **80303006.3**

(22) Date of filing: **29.08.80**

(54) Vehicle for transporting containers.

(30) Priority: **06.09.79 GB 7930886**

(43) Date of publication of application:
**18.03.81 Bulletin 81/11**

(45) Publication of the grant of the patent:
**13.06.84 Bulletin 84/24**

(84) Designated Contracting States:
**AT BE CH DE FR GB IT LI LU NL SE**

(56) References cited:
**EP - A - 0 012 145**
**DE - A - 2 616 813**
**FR - A - 2 169 810**
**FR - A - 2 301 408**
**FR - A - 2 332 153**
**FR - A - 2 391 092**
**FR - A - 2 411 729**
**GB - A - 2 033 346**

(73) Proprietor: **David MacKrill Engineering Ltd.**
**Unit Six, Robert Boby Works St. Andrews Street South**
**Bury St. Edmunds Suffolk IP33 3PH (GB)**

(72) Inventor: **Howard, Michael John**
**3 Diomed Drive Great Barton**
**Bury St. Edmunds Suffolk (GB)**
Inventor: **Holland, Simon Jeffree Roy**
**3 Twites Farm Cottages Great Saxham**
**Bury St. Edmunds Suffolk (GB)**

(74) Representative: **Cowan, David Robert et al,**
**WALFORD AND HARDMAN BROWN Trinity House Hales Street**
**Coventry CV1 1NP West Midlands (GB)**

Courier Press, Leamington Spa, England.

## Description

This invention relates to a vehicle for transporting containers and in particular to a vehicle fitted with container handling equipment whereby containers may be loaded onto and unloaded from the vehicle.

In loading and unloading relatively long containers on vehicles there has been proposed handling equipment including an L-shaped member which is hooked at one end to engage a bar carried on the forward end of the container. The L-shaped member moves through an arc during the loading/unloading operation and the container is picked up from or deposited to the rear of the vehicle. In order to reduce the forces imposed during the loading/unloading operation and to reduce the height of the container during unloading and loading it has been proposed to move the container rearwardly of the vehicle as a first step in the unloading operation before the front end of the container is lifted through the arc onto the ground. Various ways of effecting this operation have been proposed, including sliding the container during said first step.

There has also been proposed in FR—A—2169810 moving the container rearwardly by a pivoting action of the L-shaped member during the first step in the unloading operation and then pivoting the L-shaped member and an associated frame about a further pivot so that the end of the arm carrying the container moves through two arcs during the loading/unloading operation. In such an arrangement the control of the first step of movement has been found to be inadequate, particularly in approaching the transition between the first and second arcs of movement, and an improved locking means is required.

An object of the invention is to provide an improved vehicle for transporting containers which is able to operate under the various constraints imposed, such as the use of existing container configurations and vehicle constructions, and keeping within prevailing space requirements.

According to the invention a vehicle for transporting a container comprises container handling means mounted on the vehicle and including an L-shaped member, the free end of one arm of which is connectable to the container and the L-shaped member being pivotable about a first generally horizontal pivot at the free end of the other arm of the member, a first frame to one end of which said first pivot is mounted, the first frame being pivotable about a second generally horizontal pivot towards the other end of the first frame, a linkage extending between the L-shaped member and the first frame at positions spaced from the first and second pivots, and first jack means connected at one end to the vehicle and at the other end to the linkage whereby an operation of the jack means the L-shaped member pivots about said first pivot and then, on activating locking means for the linkage, the first frame pivots about the second pivot to move the container from the vehicle and onto the ground, the end of the arm of the L-shaped member connected to the container moving through two arcs of movement during an unloading operation, a first arc resulting from pivoting of the L-shaped member about the first pivot and the second arc resulting from movement of the first frame about the second pivot. A container handling means of this type is known from FR—A—2169810. The invention is characterized by second jack means constituting said locking means controlling the movement of the linkage, the second jack means being pivotable about the second pivot and connected to the linkage whereby movement of the linkage relative to the L-shaped member and to the first frame can be prevented during pivoting of the first frame about the second pivot, and the second jack means being operable to secure the L-shaped member against pivoting about the first pivot relative to the first frame.

Conveniently the radii of the first and second arcs are substantially the same and have the first and second pivots respectively as their axes.

The handling device may comprise a shaft to which one end of the first jack means is pivotally attached and to which the linkage is pivotally attached, the linkage including tie rod means and rocker means, one end of the tie rod means being pivotally attached to said shaft and the other end being pivotally attached to said other arm of the L-shaped member, and one end of the rocker means being pivotally attached to said shaft, the other end being pivotally connected to the first frame.

Preferably the container handling means provides for tipping of the container while mounted on the vehicle. For this purpose the handling means comprises a tipping frame towards one end of which said second pivot is carried, the other end of the tipping frame being pivotally mounted on the vehicle, the L-shaped member being securable against rotation about the first pivot relative to the first frame and the container being securable against movement relative to the first, second and tipping frames, whereby the tipping frame, the first frame and the L-shaped member are pivotable together about the pivotal attachment of the tipping frame to the vehicle on operation of the first jack means in a tipping mode of the vehicle.

Further features of the invention will appear from the following description of an embodiment of the invention given by way of example only and with reference to the drawings in which:

Fig. 1 is a side elevation of a vehicle showing the container loading and unloading operation,

Fig. 2 is a plan view of the container handling means,

Fig. 3 is a view similar to Fig. 1 of the vehicle in a container tipping mode,

Fig. 4 is a perspective view of locking means for locking the tipping frame relative to the sub-frame,

Fig. 5 is a side elevation of locking means for locking the container onto the vehicle, and

Fig. 6 is a side elevation of further locking means for locking the container onto the vehicle.

Referring to the drawings a vehicle is shown which is of conventional construction except for the provision of a container handling system mounted on the vehicle chassis 14 to the rear of the vehicle cab 11.

The container handling system comprises a sub-frame 9 which is rigidly mounted on the chassis 14. The sub-frame 9 extends the length of the chassis 14 from the rearward end up to the cab 11 and at its rear the sub-frame 9 is formed with brackets 12 in which are mounted transverse horizontal shafts 13. The shafts 13 rotatably carry flanged rollers 8 towards one end and a tipping frame 7 is pivotally mounted on the shafts 13 inwardly of the brackets 12. The tipping frame 7 extends forwardly from the shafts 13 and the axis of pivoting of the tipping frame 7 is designated H in the drawing. Towards the forward end of the tipping frame 7, pivots 15 pivotally support a generally Y-shaped lift frame 6 from the tipping frame 7 about an axis G.

The lift frame 6 extends forwardly from the pivots 15 and towards the forward end of the frame 6 are horizontal pivots 16 having an axis B to which is pivotally attached an L-shaped member 2. The member 2 has a forwardly extending arm 17 and an upwardly extending arm 18, the upwardly extending arm 18 having a hook 1 at its upper end and the free end of the arm 17 being attached to the pivots 16.

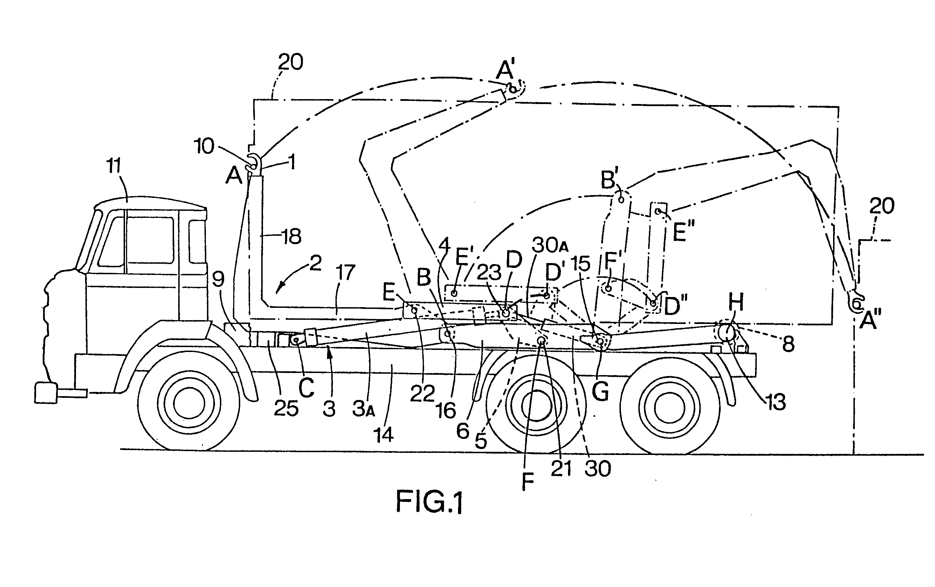

The L-shaped member 2 and the lift frame 6 are shown in their transport position in full lines in Fig. 1. The system is also shown in chain lines in an intermediate unloading position and in a container set down or pick-up position, as will be described. A container 20 is shown in Fig. 1 in a transport position on the vehicle and in a demounted position to the rear of the vehicle. At the forward end of the container is a lifting bar 10 which is engageable by the hook 1. The container 20 is of conventional construction generally comprising a rectangular box having a rear door and being fitted with rails or runners (not shown) on its underside with which the flanged rollers 8 are engageable.

Connected between the L-shaped member 2 and the lift frame 6 is a linkage, including interconnected tie rods 4 and a rocker 5. The rocker 5 is pivotally mounted at one end about a pivot 21 having an axis F to the lift frame 6, the pivots 21 being spaced forward from the pivots 15.

The tie rods 4 are of generally inverted U shape in cross section and each are pivotally mounted at one end on the arm 17 of the L-shaped member 2 by a pivot 22 having an axis E which is spaced forwardly from the pivots 16. The tie rods 4 and the rocker 5 are pivotally interconnected at their other ends by a shaft 23 having an axis D.

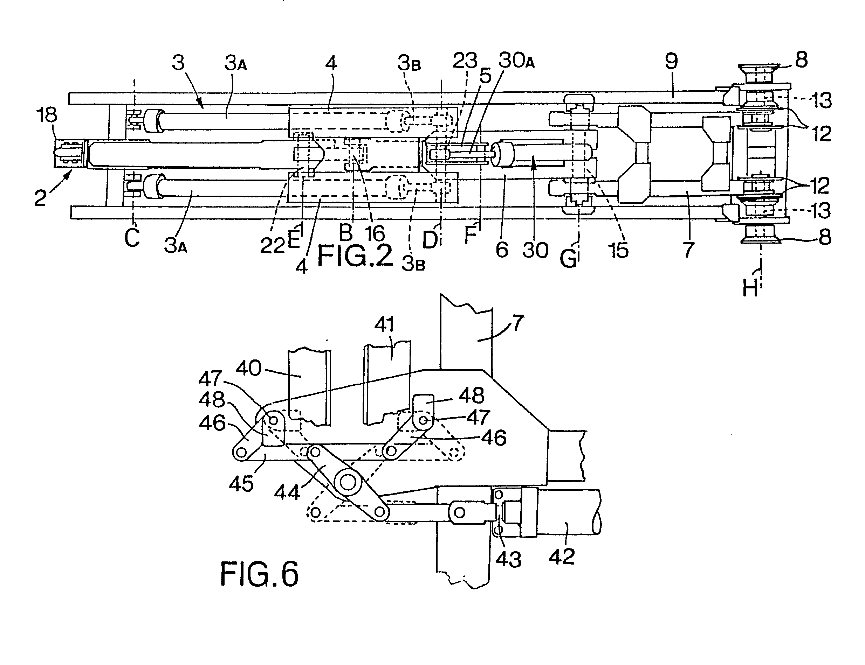

A jack in the form of two hydraulically-operated piston and cylinder devices 3 is connected with its cylinders 3A pivotally mounted on the sub-frame 9 about an axis C and its piston rods 3B pivotally mounted on the shaft 23. As shown in full lines in Figs. 1 and 2, the jack 3 is in its fully retracted position. The devices each lie beneath and in general alignment seen vertically with one of the tie rods 4. A stop 25 is provided on the sub-frame 9 to engage the underside of the arm 17 of the L-shaped member and to restrict the extent of downward movement of the arm 17. Similarly a stop (not shown) restricts the downward movement of the lift frame 6 relative to the sub-frame 9. Moreover the tipping frame 7 is restricted in its downward movement by a seating 56 for the pivot 15 carried on the sub-frame 9.

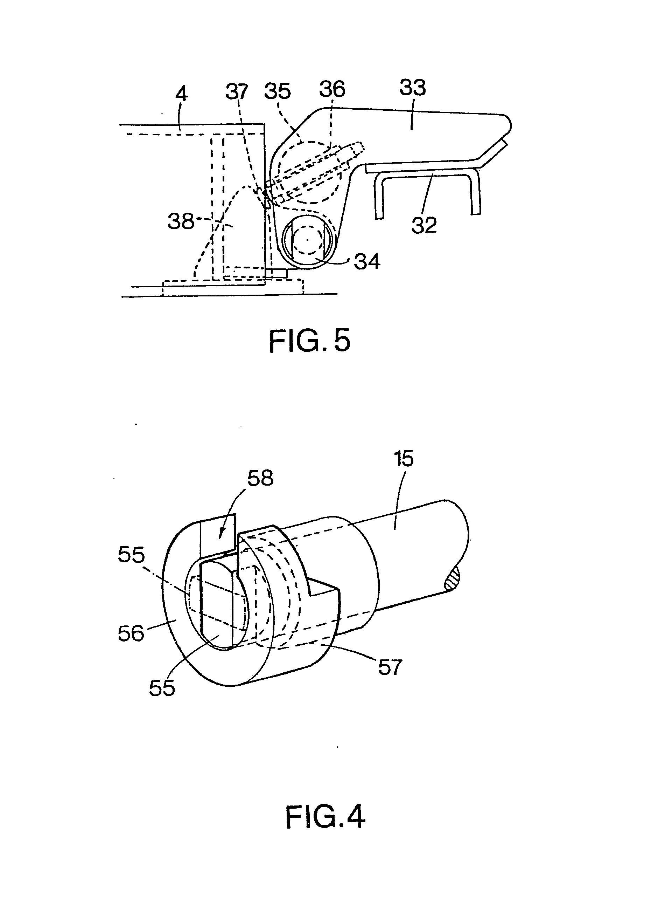

A locking device, to be described in relation to Fig. 4 is provided to be operable to prevent relative movement between the tipping frame 7 and the subframe 9 and locking devices to be described in relation to Figs. 5 and 6 are provided to lock the container 20 to the tie rods 4 or to the tipping frame 7 respectively when the container is fully mounted on the vehicle.

A locking ram 30 in the form of a hydraulically powered piston and cylinder is mounted with its piston rod 30A pivotally mounted on the shaft 23 and its cylinder pivotally mounted on the pivot 15. The locking ram 30 is operable either to be retracted from the extended position shown in full lines in Fig. 1 as the lifting jack 3 is extended during an unloading mode and locked in the retracted position, or to be locked in its extended position during a tipping mode.

Referring now to Fig. 4 a locking arrangement for locking the tipping frame 7 relative to the sub-frame 9 during an unloading operation is shown. This locking arrangement is required at the stage when the L-shaped member 2 has pivoted about axis B and the lift frame 6 has pivoted about axis G to a position in which the container rear end has first contacted the ground because it is only at this stage that the tipping frame 7 may tend to rotate about its axis H.

The lift frame pivot 15 is constituted by a shaft which rotates with the lift frame and of which one outer end is shown in Fig. 4, the opposite outer end being of similar construction. The outermost portion 55 of the shaft 15 is of generally rectangular shape and is located within a part-annular portion 56 of a seating 57 for the shaft end which is secured to the sub-frame 9. The portion 56 has an upwardly-directed opening 58 of a width sufficient to admit the portion 55 when it is aligned with the opening, as shown in full lines in Fig. 4 so that the shaft can be raised through the opening during a tipping operation. However when the shaft 15 is rotated, as occurs when the lift frame 6 is raised during an unloading sequence, the portion 55 takes up a position in which it is unable to pass through the opening 58, as shown by chain lines in Fig. 4. Thus the tipping frame 7 does not inadvertently rise during the final stages of the unloading sequence relative to the subframe.

Fig. 5 shows one form of locking device for locking the container 20 to the tie rod 4 during transport of the container on the vehicle. The container has a pocket (not shown) at each side in each of which is located a bar 32 extending outwardly of the container pocket. Each bar 32 has an upper surface which is engageable by the undersurface of a cranked pivoting arm or catch 33 mounted about a pivot 34 carried on one of the tie rods 4. The arm 33 is spring-urged away from the bar 32 i.e. in the anticlockwise direction as seen in Fig. 5 and carries a shaft 35 spaced from the pivot 34 and interconnecting the arms 33 on opposite sides of the vehicle. Extending radially through the shaft 35 is a rod 33 having an abutment member 37 at one end and being adjustable to adjust the spacing of the member 37 from the shaft 35. In a locking position of the arms 33 the abutment member 37 engages a stop member 38 mounted on the lift frame 6. Thus as the tie rods 4 begin to be pivoted in the initial part of the unloading sequence the pivot 34 moves rearwards. On completion of the rotation of the arm 33 about the pivot 34 the abutment member 37 is disengaged from the stop member 38 which being mounted on the lift frame does not move at this stage, and the arm 33 is caused to move anticlockwise about the pivot 34 in a direction away from the bar 32 under said spring action. The container is then free to move rearwardly relative to the locking mechanism. Although, at the same time, the container 20 is beginning to be raised the arrangement is such that the arm 33 moves upwards at a faster rate than the bar 32. In the loading operation the reverse movement takes place with the member 37 moving down and engaging the stop member 38 towards the completion of the loading operation and the arm 33 being brought into contact with the bar 32.

In the tipping mode the arm 33 remains engaged with the bar 32 to lock the container in position.

Fig. 5 shows an optional additional locking device for locking the container to, in this case, the tipping frame 7. Rails 40 or 41 extend along the underside of the container. In this case alternative positions of two sets of rails as may be fitted to the container are indicated, one set comprising two spaced parallel rails 40 and the other set comprising two spaced parallel rails 41 (only one rail 40 and 41 of each set being shown) so that two different types of container can be used having different rail spacings.

The locking mechanism is mounted on the tipping frame 7 and the mechanism includes a pneumatic cylinder 42 with a piston rod 43 extending from each end, the rods being associated with a piston (not shown). For convenience, only one piston rod and its associated mechanism is shown and described but it will be appreciated that the other piston rod is arranged to lock the other rails 40 and 41 in a similar manner.

The piston rod 43 is connected to one end of a centrally pivoted link 44, the other end of the link 44 being pivotally attached to the inner ends of two links 45. To the outer ends of the links 45 are attached links 46 mounted on pivotal shafts 47 which each carry a locking arm 48. As shown in full lines the arms 48 are each in an inoperative position but it will be seen that upon extension of the piston rod 43 from the cylinder 42 the links 44 and 46 pivot, the links 45 translate and the shafts 47 are rotated in opposite directions to cause the arms 48 to rotate through 90° and engage under horizontal flanges of the rails 40, 41 as shown in chain lines. Thus the rails are locked to the tipping frame to secure the container in place. Whenever it is desired to unload the container the piston rods 43 are retracted to disengage the arm 48 and release the container 20.

For the purpose of accommodating the two sets of rails 40 and 41 rollers 8 at the rear end of the tipping frame may be provided to receive both sets of rails.

Referring particularly to Fig. 1 the operation of the vehicle in loading or unloading the container is as follows.

In describing the operation a container unloading sequence will be referred to but it will be seen that the loading sequence is generally the same in reverse order.

The jack 3 is extended to position CD' with the locking arm 30 free to retract. This causes the L-shaped member 2 to pivot about axis B from position AB to A'B. At the same time the rocker 5 rotates about axis F from position DF to D'F and the tie rods 4 are moved from position DE to D'E'. During this movement the hook 1 moves through an arc from A to A', the arc having the axis B as its centre. This part of the unloading movement ends when the rocker 5 comes up against an abutment created by full retraction of the ram 30 preventing further movement of the rocker 5 about axis F. The entry and discharge of fluid from the ram 30 is prevented at this stage so that the ram acts as a rigid link for the remainder of the unloading sequence.

Further extension of the jack 3 from the position described, i.e. from position CD' towards CD'', causes pivoting of the lift frame 6 about pivot axis G from position BG to B'G.

At the same time the L-shaped member 2 moves from position BA' to B'A'', the rocker 5 from position FD' to F'D'', the tie rods 4 from position D'E' to D''E'' and the ram 30 from position GD' to GD''.

During the unloading movement of the container 20 the container moves along the rollers 8 on its runners and then the rear end of the container contacts the ground. The container may have wheels (not shown) on its rear end so that it may move over the ground but more usually the vehicle is unbraked and moves forward during the final phase of the unloading operation. The vehicle is moved forward further for removal of the hook 1 from the bar 10 when the container is resting wholly on the ground.

Loading of the container onto the vehicle is effected by the reverse procedure, the hook 1 being first engaged under the bar 10.

It will be seen that during pivoting of the lift arm 6 the hook 1 moves through a further arc A'A'', this time having its centre the axis G. The latter arc is, in its total length, about twice that of the arc in the initial movement of the hook from A to A'. It will also be seen that the radii of the arcs AA' and A'A'' are substantially the same so that the top of the container is no higher for the arc A'A'' than for the arc AA'.

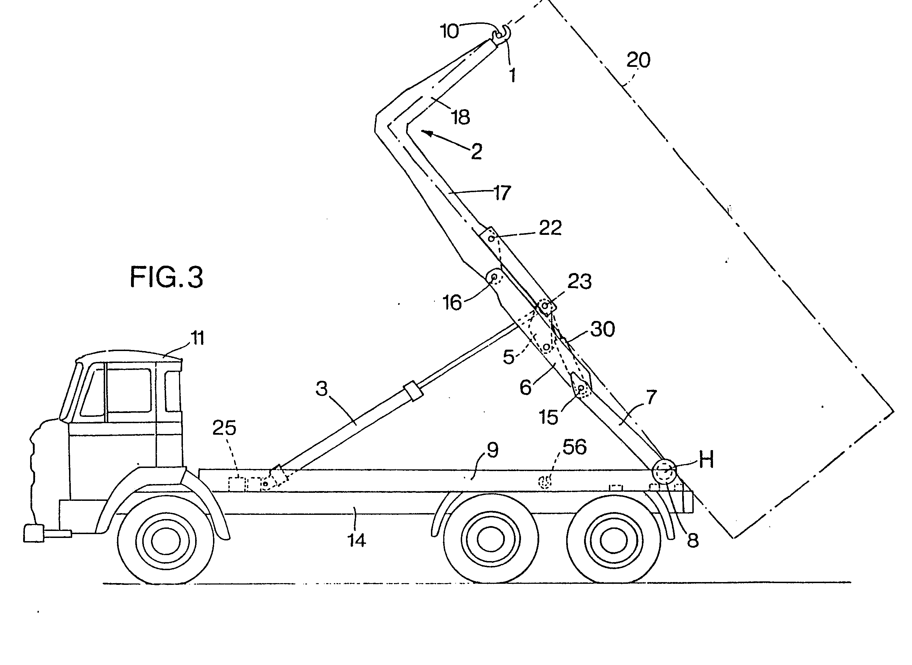

Referring now to Fig. 3 the vehicle may also be operated in a tipping mode in which the container is tipped about the pivot axis H to effect emptying of the container, i.e. to the position shown in Fig. 3.

To provide the tipping mode the locking ram 30 is locked in the extended position to prevent relative movement between the rocking arm 5 and the lift frame 6. The container is locked on the handling device to prevent relative movement between the lift frame 6 and the tipping frame 7. When the parts are all locked together operation of the jack 3 causes the tipping frame 7, the lift frame 6 and the L-shaped member 2 to rotate together as a unit about the axis H, the container moving about the flanged rollers 8 to the position shown in Fig. 3 in which the jack is fully extended. After emptying of the container 20 through its open rear end, the jack 3 is retracted to move the container back to the transport position.

A stabiliser jack (not shown) may be provided at the rear end of the vehicle chassis to prevent any tendency for the vehicle to tip upwards about the rearmost wheels during operation. Such a jack, in its simplest form, consists of a pivoted arm mounted at the rear of the vehicle and extending rearwards and downwards towards the ground. The lower end of the arm carries a roller which engages the ground in the operative position of the jack. A hydraulically-operated piston and cylinder device is pivotally connected to the vehicle and to the arm at a position spaced from the connection of the arms to the vehicle. The arm is raised and lowered relative to the ground by retraction and extension of the piston and cylinder device.

Various characteristics of the described system will be noted:

Only one set of rams or jacks for the unloading of the container are used compared with other systems in which two sets of rams are required, the extra set being for effecting an initial rearward movement of the container during unloading.

The loading and unloading procedure does not involve any sliding movements and does not rely on the operator having to judge when to change over from a pivoting to a sliding movement or vice versa because only a single control for the jack is required.

The system is able to use containers which are employed with existing handling systems and it can be mounted on most kinds of vehicles to be used for transporting containers.

Due to the geometry of the arrangement which provides for the described arcs of movement during an unloading/loading sequence to be of the order of one third and two thirds of the total movement and which provides for the arcs of movement to be of similar radius various advantageous results arise. Long containers can be handled without severe strains being imposed on the structure and the maximum height of the container is not excessive. This is achieved with a relatively simple structure in which operator error can be eliminated. Moreover a continuous unloading action can be achieved due to the use of one set of rams for the full range of unloading movement. Furthermore such rams also serve to tip the container in the tipping mode.

**Claims**

1. A vehicle for transporting a container comprising container handling means mounted on the vehicle and including an L-shaped member (2), the free end (1) of one arm (18) of which is connectable to the container (20) and the L-shaped member being pivotable about a first generally horizontal pivot (16) at the free end of the other arm (17) of the member, a first frame (6) to one end of which said first pivot (16) is mounted, the first frame being pivotable about a second generally horizontal pivot (15) towards the other end of the first frame; a linkage (4, 6) extending between the first frame and the L-shaped member at positions spaced from the first and second pivots (16 and 15); and first jack means (3) connected at one end to the vehicle and at the other end to the linkage whereby on operation of the jack means the L-shaped member pivots about said first pivot and then, on activating locking means (30) for the linkage, the first frame pivots about the second pivot to move the container from the vehicle and onto the ground, the end of the arm (18) of the L-shaped member (2) connected to the container (20) moving through two arcs of movement during an unloading operation, a first arc (AA') resulting from pivoting of the L-shaped member about the first pivot and the second arc (A'A'') resulting from movement of the first frame (16) about the second pivot (15), characterised by second jack means (30) constituting said locking means controlling the movement of the linkage (4, 6), the second jack means being pivotable about the second pivot (15) and connected to the linkage whereby movement of the linkage relative to the L-shaped member (2) and to the first frame (6) can be prevented during pivoting of the first frame about the second pivot (15), and the second jack means (30) being operable to secure the L-shaped member (2) against pivoting about the first pivot (16) relative to the first frame (6).

2. A vehicle according to claim 1 characterised in that the length of the first arc (AA') is substantially one half of the length of the second arc (A'A'') by reason of a particular choice of the geometry of the L-shaped member (2), the linkage (4, 6), a frame (7) and the respective pivots (15, 16 and 13).

3. A vehicle according to claim 1 or 2 characterised in that the first jack means (3) includes a pair of hydraulic rams disposed to either side of said other arm (17) of the L-shaped member (2) and the linkage includes tie rod members (4) connected to said other arm and each tie rod member in general alignment with a hydraulic ram.

4. A vehicle according to any one of the preceding claims characterised in that the radii of the first and second arcs (AA' and A'A'') are substantially the same and have the first and second pivots (16, 15) respectively as their axes.

5. A vehicle according to any one of the preceding claims characterised by a shaft (23) to which one end of the first jack means (3) is pivotally attached and to which the linkage is pivotally attached, the linkage including tie rod means (4) and rocker means (5), one end of the tie rod means being pivotally attached to said shaft and the other end being pivotally attached to said other arm (17) of the L-shaped member (2), and one end of the rocker means being pivotally attached to said shaft, the other end being pivotally connected to the first frame (6).

6. A vehicle according to any one of the preceding claims characterised by a tipping frame (7) towards one end of which said second pivot (15) is carried, the other end of the tipping frame being pivotally mounted on the vehicle, the L-shaped member (2) being securable against rotation about the first pivot (16) relative to the first frame (6) and the container (20) being securable against movement relative to the first frame (6) and the tipping frame (7), the first frame (6) and the L-shaped member are pivotable together about the pivotal attachment (13) of the tipping frame (7) to the vehicle on operation of the first jack means (3) in a tipping mode of the vehicle.

7. A vehicle according to any one of the preceding claims characterised in that the first jack means (3) is in the form of at least one piston and cylinder device which effects an unloading operation through said two arcs of movement (AA' and AA'A'') in a continuous extension of the device.

8. A vehicle according to any one of the preceding claims characterised by locking means (42, 43, 44, 45, 46, 47, 48) for locking the container (20) on the vehicle during transit of the vehicle in which the locking means comprises catches (48) which are mounted on the vehicle and are engageable with rails (40; 41) mounted on the underside of the container.

## Patentansprüche

1. Transportfahrzeug für Container mit einer auf dem Fahrzeug montierten Container-Handhabungsvorrichtung,

— die einen L-förmig ausgebildeten Teil (2) besitzt dessen einer Arm (18) mit seinem freien Ende (1) an einem Container (20) zu befestigen ist und dessen anderer Arm (17) mit seinem freien Ende an einer im wesentlichen horizontalen ersten Achse (16) angelenkt ist, so daß der L-förmig ausgebildete Teil um diese erste Achse schwenkbar ist,
— die einen ersten Rahmen (6) aufweist, an dessen einem Ende die besagte erste Achse gelagert ist und der in Richtung seines anderen Endes um eine im wesentlichen horizontale zweite Achse (15) verschwenkbar ist,
— und die ein Lenkgestänge (4, 5) aufweist, das sich in einem Abstand von der ersten und zweiten Achse (16 und 15) swischen dem ersten Rahmen und dem L-förmig ausgebildeten Teil erstreckt;
— die weiterhin eine erste Hebevorrichtung (3) besitzt, die mit ihrem einen Ende an dem Fahrzeug und mit ihrem anderen Ende an dem Lenkgestänge derart angelenkt ist, daß bei Betätigung der Hebevorrichtung der L-förmig ausgebildete Teil um die besagte erste Achse verschwenkt und dann, bei Aktivierung einer Haltevorrichtung (30) für das Lenkgestänge, der erste Rahmen um die zweite Achse schwenkt, um den Container von dem Fahrzeug auf den Erdboden abzuladen,
— wobei bei der Ablade-Bewegung das mit dem Container verbundene Ende des einen Armes (18) des L-förmig ausgebildeten Teils (2) zwei Kreisbogen durchläuft, nämlich einen ersten Kreisbogen (AA') infolge des Verschwenkens des L-förmig ausgebildeten Teils um die erste Achse und einen zweiten Kreisbogen (A'A'') infolge de Bewegung des ersten Rahmens (6) um die zweite Achse (15),

gekennzeichnet durch
— eine zweite Hebevorrichtung (30), die die Haltevorrichtung für die Steuerung de Bewegung des Lenkgestänges (4, 5) bildet und die um die zweite Achse (15) verschwenkbar ist und mit dem Lenkgestänge verbunden ist,
— wodurch die Bewegung des Lenkgestänges relativ zu dem L-förmig ausgebildeten Teil (2) und dem ersten Rahmen (6) während der Schwenkbewegung des ersten Rahmens um die zweite Achse (15) verhindert werden kann,
— und durch die Betätigbarkeit der zweiten Hebevorrichtung (30), um den L-förmig ausgebildeten Teil (2) gegen ein Verschwenken um die erste Achse (16) relativ zu dem ersten Rahmen (6) zu fixieren.

2. Transportfahrzeug nach Anspurch 1, dadurch gekennzeichnet,

daß durch eine bestimmte Wahl der Geometrie des L-förmig ausgebildeten Teils (2), des Lenkgestänges (4, 5), eines Rahmens (7) und der entsprechenden Achsen (15, 16 und 13) die Länge des ersten Kreisbogens (AA') im wesentlichen der Hälfte der Länge des zweiten Kreisbogens (A'A'') entspricht.

3. Transportfahrzeug nach Anspruch 1 oder 2, dadurch gekennzeichnet,

— daß die erste Hebevorrichtung (3) ein Paar hydraulischer Schubkolben aufweist, die auf beiden Seiten des besagten anderen Arms (17) des L-förmig ausgebildeten Teils (2) angeordnet sind,
— und daß das Lenkgestänge Verbindungsstangen (4) aufweist, die mit dem Arm (17) verbunden sind, wobei jede Verbindungsstange im wesentlichen mit dem hydraulischen Schubkolben fluchtet.

4. Transportfahrzeug nach einem der vorhergehenden Ansprüche dadurch gekennzeichnet,

— daß die Radien des ersten und des zweiten Kreisbogens (AA' und A'A'') im wesentlichen gleich sind
— und daß die erste bzw. die zweite Achse (16, 15) die Mittelunkte der Kreisbogen bilden.

5. Transportfahrzeug nach einem der vorhergehenden Ansprüche gekennzeichnet durch

— eine Achswelle (23) an der das eine Ende der ersten Hebevorrichtung (3) und das Lenkgestänge schwenkbar angelenkt ist,
— wobei das Lenkgestänge Verbindungsstangen (4) und Steuerschwingen (5) aufweist und das eine Ende der Verbindungsstangen an der Achswelle und deren anderes Ende an dem anderen Arm (17) des L-förmig ausgebildeten Teils (2) sowie das eine Ende der Steuerschwingen an der besagten Achswelle und deren anderes Ende an dem ersten Rahmen (6) schwenkbar angelenkt sind.

6. Transportfahrzeug nach einem der vorhergehenden Ansprüche, gekennzeichnet durch

— einen Kipprahmen (7), der im Bereich seines einen Endes die zweite Achse (15) trägt und dessen anderes Ende schwenkbar an dem Fahrzeug montiert ist,
— wobei der L-förmig ausgebildete Teil (2) gegen Verschwenken um die erste Achse (16) relativ zum ersten Rahmen (6) und der Container (20) gegen eine Bewegung relativ zum ersten Rahmen (6) und und Kipprahmen (7) feststellbar ist
— und wobei der erste Rahmen (6) und der L-förmig ausgebildete Teil (2) gemeinsam um die Schwenkbefestigung (13) des Kipprahmens (7) an dem Fahrzeug verschenkbar sind und zwar durch Verstellen der ersten Hebevorrichtung (3) in eine entsprechend geneigte Betriebsart.

7. Transportfahrzeug nach einem der vorhergehenden Ansprüche dadurch gekennzeichnet,

daß die erste Hebevorrichtung (3) durch mindestens einen Kolben und Zylinder gegeben ist, die durch eine kontinuierliche Längenverstellung die Ablade-Bewegung entsprechend den besagten zwei Kreisbogen-Bewegungen (AA' und A'A'') bewirken.

8. Transportfahrzeug nach einem der vorhergehenden Ansprüche, gekennzeichnet durch

— Befestigungsvorrichtungen (42, 43, 44, 45, 46, 47, 48) zum Befestigen des Containers (20) auf dem Fahrzeug während des Fahrzustandes,
— wobei die Befestigungsvorrichtungen Fanglaschen (48) aufweisen, die an dem Fahrzeug befestigt sind und mit Schienen (40, 41) zusammenwirken, die an der Unterseite des Containers angebracht sind.

**Revendications**

1. Véhicule de transport d'un conteneur, comprenant un dispositif de manutention de conteneur monté sur le véhicule et comprenant un organe en L (2), l'extrémité libre (1) d'un bras (18) de cet organe étant destinée à être raccordée au conteneur (20) et l'organe en L pouvant pivoter autour d'un premier pivot (16) horzontal de façon générale, placé à l'extrémité libre de l'autre bras (17) de l'organe, un premier châssis (6) à une première extrémité duquel est monté le premier pivot (16), le premier châssis étant destiné à pivoter autour d'un second pivot (15) horizontal de façon générale vers l'autre extrémité du premier châssis, une tringlerie (4, 6) disposée entre le premier châssis et l'organe en L dans des positions distantes du premier et du second pivot (16 et 15), et un premier dispositif à vérin (3) raccordé, à une première extrémité, au véhicule et, à l'autre extrémité, à la tringlerie, si bien que, lors du fonctionnement du dispositif à vérin, l'organe en L pivote autour du premier pivot puis, lors de la monoeuvre du dispositif de verrouillage (30) de la tringlerie, le premier châssis pivote autour du second pivot afin qu'il déplace le conteneur du vèhicule sur le sol, l'extrémité du bras (18) de l'organe en L (2) raccordée au conteneur (20) se déplaçant suivant deux arcs de cercle pendant une opération de déchargement, un premier arc (AA') étant dû au pivotement de l'organe en L autour du premier pivot et le second arc (A'A'') étant dû au déplacement du premier châssis (16) autour du second pivot (15), caractérisé par un second dispositif à vérin constituant le dispositif de verrouillage qui commande le déplacement de la tringlerie (4, 6), le second dispositif à vérin pouvant pivoter autour du second pivot (15) et étant raccordé à la tringlerie, si bien que le déplacement de la tringlerie par rapport à l'organe en L (2) et au premier châssis (6) peut être empêché pendant le pivotement du premier châssis autour du second pivot (15), et le second dispositif à vérin (30) est destiné à fixer l'organe en L (2) afin qu'il ne puisse pas pivoter autour du premier pivot (16) par rapport au premier châssis (6).

2. Véhicule selon la revendication 1, caractérisé en ce que la longueur du premier arc (AA') est sensiblement égale à la moité de la longueur du second arc (A'A'') par sélection particulière de la configuration géométrique de l'organe en L (2), de la tringlerie (4, 6), d'un châssis (7) et des pivots respectifs (15, 16 et 13).

3. Véhicule selon l'une des revendications 1 et 2, caractérisé en ce que le premier dispositif à vérin (3) comporte deux vérins hydrauliques placés de part et d'autre de l'autre bras (17) de l'organe en L (2) et la tringlerie comporte de barres d'accouplement (4) raccordée à l'autre bras et chaque barre d'accouplement est alignée de façon générale sur un vérin hydraulique.

4. Véhicule selon l'une quelconque des revendications précédentes, caractérisé en ce que les rayons du premier et du second arc de cercle (AA' et A'A'') sont pratiquement identiques et ont pour axes le premier et le second pivot (16, 15) respectivement.

5. Véhicule selon l'une quelconque des revendications précédentes, caractérisé par un arbre (23) auquel est articulée une première extrémité du premier dispositif à vérin (3) et auquel la tringlerie est articulée, la tringlerie comprenant des barres d'accouplement (4) et un balancier (5), une première extrémité des barres d'accouplement étant articulée sur l'arbre et l'autre extrémité étant articulée à l'autre bras (17) de l'organe en L (2), une première extrémité du balancier étant articulée à l'arbre et l'autre extrémité étant articulée sur le premier châssis (6).

6. Véhicule selon l'une quelconque des revendications précédentes, caractérisé par un châssis basculant (7) vers une extrémité duquel est porté le second pivot (15), l'autre extrémité du châssis basculant étant articulée sur le vèhicule, l'organe en L (2) étant destiné à être fixé afin qu'il ne puisse pas tourner autour du premier pivot (16) par rapport au premier châssis (6), et le conteneur (20) étant destiné à être fixé afin qu'il ne puisse pas se déplacer par rapport au premier châssis (6) et au châssis basculant (7), le premier châssis (6) et l'organe en L étant destinés à pivoter ensemble autour de l'articulation (13) du châssis basculant (7) sur le véhicule lors du fonctionnement du premier dispositif à vérin (3) lorsque le véhicule est en mode basculant.

7. Véhicule selon l'une quelconque des reventications précédentes, caractérisé en ce que le premier vérin (3) est sous forme d'au moins un vérin à piston et cylindre qui assure une opération de déchargement suivant deux arcs de déplacement (AA' et AA'A'') lors d'un allongement continu de vérin.

8. Véhicule selon l'une quelconque des revendications précédentes, caractérisé par un dispositif (42, 43, 44, 45, 46. 47, 48) de verrouillage du conteneur (20) sur le véhicule pendant le déplacement du véhicule, et le dispositif de verrouillage comporte des crochets (48) qui sont montés sur le véhicule et sont destinés à coopérer avec des rails (40; 41) montés à la face inférieure de conteneur.

FIG.1

0 025 322

FIG.2

FIG.6

FIG.3

FIG. 5

FIG.4